# FASCICULE DE BREVET EUROPEEN

(11) **EP 1 390 791 B1**
(45) Date de publication et mention de la délivrance du brevet: **14.12.2005**
(21) Numéro de dépôt: 02747487.3
(22) Date de dépôt: 24.05.2002
(51) Int. Cl.: G02B 6/44, G02B 6/38

(54) **REPARTITEUR AUTOMATIQUE DE GRANDE CAPACITE, NOTAMMENT POUR FIBRES OPTIQUES, DISPOSITIF ET PROCEDE DE CONNEXION/DECONNEXION AUTOMATIQUE DE FIBRES DE LIAISON BRASSEES DANS CE REPARTITEUR**
AUTOMATISCHE HOCHLEISTUNGSVERTEILER FÜR OPTISCHE FASERN SOWIE VORRICHTUNG UND VERFAHREN ZUR AUTOMATISCHEN KOPPLUNG UND TRENNUNG OPTISCHER FASERN IN DIESEM VERTEILER
LARGE CAPACITY AUTOMATIC DISTRIBUTOR, PARTICULARLY FOR OPTIC FIBRES; DEVICE AND METHOD FOR AUTOMATIC CONNECTION/DISCONNECTION OF THE BINDING FIBRES WITHIN THE DISTRIBUTOR

(30) Priorité: 29.05.2001 FR 0107032
(43) Date de publication de la demande: 25.02.2004
(73) Titulaire: FRANCE TELECOM, 75015 Paris (FR)
(72) Inventeur: MORELLEC, Daniel, F-22300 Lannion (FR); LE TRAON, Gilles, F-22300 Lannion (FR); BOUCHET, Yoann, F-44110 Erbray (FR)
(86) Numéro de dépôt international: PCT/FR2002/001750
(87) Numéro de publication internationale: WO 2002/097504

(56) Documents cités:
- EP-A- 0 567 143
- EP-A- 0 631 165
- EP-A- 0 724 367
- EP-A- 0 975 180
- US-A- 5 129 030
- US-A- 6 157 766
- PATENT ABSTRACTS OF JAPAN vol. 1997, no. 10, 31 octobre 1997 (1997-10-31) & JP 09 159840 A (FUJIKURA LTD), 20 juin 1997 (1997-06-20)

## Description

La présente invention concerne un répartiteur de fibres optiques à haute densité et grande capacité.

Plus particulièrement, l'invention concerne un répartiteur de fibres optiques comprenant :
- des premier et second panneaux de brassage situés en vis-à-vis,
- au moins un premier support de modules de raccordement appartenant à chaque panneau, chaque module du premier panneau étant adapté pour être connecté à une extrémité d'une fibre optique d'un premier groupe et chaque module du second panneau étant adapté pour être connecté à une extrémité d'une fibre optique d'un second groupe, une fibre optique du premier groupe étant destinée à être reliée à une fibre optique du second groupe par l'intermédiaire d'une fibre de liaison qui comporte deux extrémités reçues respectivement dans un port d'un des modules du premier panneau et dans un port d'un des modules du second panneau.

Un répartiteur de ce type est décrit par exemple dans le document EP 0 886 158. Lors d'une opération de brassage, le support de modules de raccordement sur lequel se trouve la fibre de liaison à brasser est mis en position verticale de telle sorte qu'un opérateur puisse insérer ou extraire ladite fibre à l'aide d'un outil approprié hors du flot d'extrémités de fibres de liaison qui sont connectées au panneau de brassage contenant ledit support. Grâce à la mise en rotation des supports de modules de raccordement, le répartiteur décrit dans le document EP 0 886 158 présente une grande facilité d'accès aux fibres de liaison à manipuler.

L'avantage qu'offre la densité de ce répartiteur rend néanmoins délicate toute approche manuelle d'un outil dans la rangée de fibres connectées au support relevé en position verticale. Les perturbations sur les fibres voisines constituent un risque permanent en cas de fausse manoeuvre de la part de l'opérateur lors d'une intervention.

L'inconvénient du répartiteur ci-dessus est résolu dans le document US 5 784 515 qui décrit un répartiteur de fibres optiques dans lequel les fibres de liaison sont brassées de façon automatique. Ce répartiteur comprend un panneau de brassage horizontal qui comporte une première série de trous dans lesquels sont fixés des adaptateurs (raccords) permettant l'alignement optique des fibres. Un premier bras robotisé placé au dessous du panneau de brassage effectue la connexion ou la déconnexion des fibres. Le panneau de brassage horizontal comporte en outre une deuxième série de trous à travers lesquels passent les sur longueurs de fibres. Un second bras robotisé, placé au dessus du panneau de brassage, assure la gestion de ces sur longueurs afin de libérer l'espace d'évolution du premier bras robotisé.

Bien que ce répartiteur présente l'avantage d'être automatique, l'utilisation de deux bras robotisés alourdit toutefois considérablement la gestion des fibres à brasser. En outre, compte tenu du fait que ce répartiteur doit être équipé au potentiel de ses capacités à la mise en service, cela génère obligatoirement un surinvestissement à l'installation incompatible avec une introduction progressive de la fibre optique dans les réseaux de télécommunications.

Les documents US 5 436 987 et JP-A-07-333530 décrivent tous deux des répartiteurs à brassage automatisé de fibres de liaison à un seul point de connexion et de grande capacité. Un robot permet de connecter ou de déconnecter toute fibre d'une extrémité choisie parmi un flot de fibres. Un système d'enroulement automatique permet de gérer les sur longueurs de fibres. Dans US 5 436 987, deux rouleaux entraînent les fibres qui ne sont pas utilisées vers une zone de stockage. Dans JP-A-07-333530, un bras muni d'un crochet vient saisir la fibre de liaison non utilisée pour la stocker.

Bien que les répartiteurs décrits dans ces deux documents permettent d'atteindre des capacités importantes, la gestion des sur longueurs de fibres semble néanmoins difficile à maîtriser, le système d'enroulement prévu étant relativement complexe à mettre en oeuvre.

La présente invention a notamment pour but de remédier aux inconvénients précités grâce à une automatisation à un coût intéressant des fonctions de brassage du répartiteur décrit dans le document EP 0 886 158.

A cet effet, dans le répartiteur selon l'invention, les premier et second panneaux comportent chacun au moins un second support de modules de raccordement, lesdits seconds supports coopérant entre eux pour former une zone de stockage de fibres de liaison non utilisées.

Grâce à ces dispositions, le répartiteur selon l'invention présente une configuration simple qui permet une optimisation des trajets de fibres de liaison entre, d'une part, la zone fonctionnelle du répartiteur, comprise entre le premier support de modules de raccordement du premier panneau de brassage et le premier support de modules de raccordement du second panneau de brassage, et, d'autre part, la zone de stockage.

Dans un mode de réalisation préféré du répartiteur selon l'invention, on a recours à l'une et/ou à l'autre des dispositions suivantes :
- les seconds supports sont agencés l'un en face de l'autre,
- les fibres de liaison non utilisées sont reliées parallèlement les unes aux autres entre le second support du premier panneau et le second support du second panneau, chaque fibre de liaison étant, au fur et à mesure du stockage, agencée directement au dessus de celle qui la précède ;
- les fibres de liaison ont toutes la même longueur ;
- les premier et second panneaux de brassage possèdent chacun des premiers et seconds côtés opposés qui s'étendent respectivement selon des première et seconde directions, les premier et second supports de modules de raccordement du premier panneau de brassage, de même que les premier et second supports de modules de raccordement du second panneau de brassage, étant montés à rotation autour d'un axe respectif s'étendant selon la première direction, de telle sorte que chaque support est adapté pour basculer entre une position de repos, dans laquelle le support s'étend vers l'extérieur du répartiteur en formant un angle avec la première direction, et une position de travail, dans laquelle le support s'étend selon la seconde direction ;
- chacun des seconds supports de modules de raccordement est agencé sur un côté du panneau de brassage qui lui est associé ;
- les deux extrémités respectives de chaque fibre de liaison s'étendent selon une troisième direction ;
- au moins un moyen de contrôle est apte à tester à distance toute fibre optique du premier groupe ou toute fibre optique du second groupe, ou les deux, en continu ou sur défaut signalé.

Egalement est décrit un dispositif de connexion/déconnexion automatique de fibres de liaison brassées dans un répartiteur selon l'invention, caractérisé en ce que il comporte au moins :
- un corps principal,
- et au moins un élément de préhension monté sur ledit corps principal qui est adapté pour saisir chaque extrémité à connecter ou à déconnecter d'une fibre de liaison, le dispositif étant conformé de telle sorte que lorsque l'élément de préhension est à proximité immédiate d'une extrémité de ladite fibre de liaison en vue de saisir cette extrémité, la totalité dudit corps principal est décalé latéralement par rapport à ladite extrémité.

Un tel dispositif offre l'avantage de conférer au répartiteur selon l'invention une autonomie complète de ses fonctions de brassage, ce qui permet la suppression de toute intervention "in situ" d'un opérateur dans le cadre d'opérations telles que notamment la création, mutation ou résiliation d'une ligne d'abonné, le passage d'une ligne en télésurveillance, etc... En outre, la conformation de ce dispositif permet de supprimer, lors de la connexion ou de la déconnexion par ce dernier d'une fibre de liaison choisie, tout risque d'interférence du dispositif avec les fibres de liaison voisines.

Dans un mode de réalisation préféré du dispositif, on a recours à l'une et/ou à l'autre des dispositions suivantes :
- ledit élément de préhension comprend un tube pourvu d'une fente longitudinale à travers laquelle est destinée à passer ladite extrémité de fibre de liaison, ledit élément de préhension étant orienté de telle sorte que lorsqu'il est à proximité immédiate de ladite extrémité, ledit tube s'étend selon la troisième direction parallèlement à ladite extrémité ;
- le corps principal comporte un déflecteur qui est destiné à guider la fibre de liaison vers le bas lorsque ladite extrémité de fibre de liaison est reçue dans le tube de l'élément de préhension ;
- un élément de maintien est destiné à solidariser une extrémité de fibre de liaison avec l'élément de préhension, après que cette extrémité ait été reçue dans le tube de l'élément de préhension ;
- l'élément de maintien est une plaque de forme allongée qui possède une extrémité pourvue d'une encoche, ladite plaque étant mobile selon la première direction entre une position de travail, dans laquelle ladite encoche est positionnée dans l'axe du tube de façon à recevoir une extrémité de fibre de liaison à déconnecter, et une position de repos, dans laquelle ladite extrémité de la plaque est située en retrait par rapport audit tube ;
- un élément poussoir est destiné à être entraîné en déplacement selon la troisième direction de façon à extraire en partie de l'élément de préhension une extrémité de fibre de liaison à connecter qui est engagée dans le tube de l'élément de préhension ;
- un moyen de centrage est prévu pour centrer l'élément de préhension par rapport à un port de module de raccordement concerné par la connexion ou la déconnexion d'une extrémité de fibre de liaison ;
- le moyen de centrage comporte un doigt qui s'étend au delà de l'élément de préhension, ledit doigt étant destiné à venir se loger dans au moins une encoche qui est formée dans le premier ou second support de modules de raccordement associé au module de raccordement concerné par la connexion ou la déconnexion d'une extrémité de fibre de liaison, ledit dispositif étant ainsi positionné par rapport audit premier ou second support de modules de raccordement avant que ladite extrémité de fibre de liaison soit connectée ou déconnectée.

La présente invention concerne également un procédé de connexion d'une fibre de liaison dans le répartiteur selon l'invention, au moyen du dispositif de connexion/déconnexion automatique.

Selon un tel procédé:
- a) on déplace le dispositif dans la zone de stockage,
- b) on déconnecte une première extrémité de fibre de liaison qui est connectée sur le second support du premier panneau de brassage dans ladite zone de stockage,
- c) on transfère ladite première extrémité de fibre en direction du premier support du premier panneau de brassage,
- d) on connecte ladite première extrémité de fibre dans un port d'un module dudit premier support,
- e) on déplace le dispositif dans la zone de stockage,
- f) on déconnecte une seconde extrémité de fibre qui est connectée sur le second support du second panneau de brassage dans ladite zone de stockage,
- g) on transfère ladite seconde extrémité de fibre en direction du premier support du second panneau de brassage,
- h) on connecte ladite seconde extrémité de fibre dans un port d'un module dudit premier support du second panneau de brassage.

Les étapes précitées présentent l'avantage non seulement d'être d'une grande simplicité, mais également d'être réduites en nombre, ceci étant rendu possible par l'agencement particulier du répartiteur. Il en résulte ainsi une réduction non négligeable du coût d'automatisation de ces étapes.

Dans un mode de réalisation préféré du dispositif, on a recours à l'une et/ou à l'autre des dispositions suivantes :
- la fibre de liaison à déconnecter dans la zone de stockage est située au niveau le plus haut dans cette zone ;
- la connexion de la fibre de liaison est effectuée au dessus du flot de fibres de liaison en fonctionnement.

La présente invention concerne également un procédé de déconnexion d'une fibre de liaison dans le répartiteur selon l'invention, au moyen du dispositif de connexion/déconnexion automatique.

Selon un tel procédé:
- a) on déplace le dispositif dans la zone comprise entre le premier support du premier panneau de brassage et le premier support du second panneau de brassage,
- b) on déconnecte une seconde extrémité de ladite fibre qui est connectée sur le premier support du second panneau de brassage,
- c) on libère ladite seconde extrémité de fibre dans le flot de fibres de liaison en fonctionnement,
- d) on déconnecte une première extrémité de la fibre qui est connectée sur le premier support du premier panneau de brassage,
- e) on extrait ladite fibre de liaison du répartiteur au moyen d'un dispositif d'extraction,
- f) on connecte ladite fibre de liaison dans la zone de stockage.

Dans un mode de réalisation préféré du dispositif, on a recours à l'une et/ou à l'autre des dispositions suivantes :
- l'étape e) consiste en une traction de ladite fibre de liaison par ladite première extrémité ;
- la traction de la fibre de liaison est effectuée au dessus du premier panneau de brassage ;
- le dispositif d'extraction de fibre de liaison comprend une paire de rouleaux entre lesquels passe ladite fibre de liaison, lesdits rouleaux étant susceptibles d'être entraînés en rotation de façon à faire défiler ladite fibre de liaison ;
- les rouleaux sont recouverts d'une matière élastiquement déformable de façon à épouser la forme de ladite fibre de liaison lors de son passage entre les rouleaux.

Dans ce qui suit, l'on va décrire un mode de réalisation préféré de l'invention en se référant aux dessins ci-annexés d'une manière bien entendu non limitative.

Sur les dessins :
- la figure 1 est une vue d'ensemble en perspective schématique du répartiteur et du dispositif de connexion/déconnexion automatique qui lui est associé,
- la figure 2 est une vue de face schématique du premier panneau de brassage du répartiteur de la figure 1,
- la figure 3 une vue de détail du répartiteur de la figure 1 qui représente le dispositif de connexion/déconnexion automatique situé entre un support de modules de raccordement du premier panneau de brassage et un support de modules de raccordement du second panneau de brassage,
- la figure 4 est une vue en perspective d'un dispositif de connexion/déconnexion automatique de fibres de liaison brassées dans le répartiteur de la figure 1, le dispositif étant représenté au voisinage d'un module de raccordement,
- la figure 5 est une vue de coupe en perspective partielle du dispositif de la figure 4, dans laquelle sont représentés ses éléments principaux,
- la figure 6 est une vue de détail en perspective de l'élément de préhension du dispositif de la figure 4,
- les figures 7A à 7D sont respectivement des vues en coupe schématique qui représentent les étapes de déconnexion d'une extrémité quelconque de fibre de liaison par rapport à un port de module de raccordement,
- les figures 8A à 8F sont respectivement des vues en coupe schématique qui représentent les étapes de connexion d'une extrémité quelconque de fibre de liaison dans un port de module de raccordement,
- les figures 9A et 9B sont respectivement des vues schématiques partielles du répartiteur de la figure 1 représentant sa liaison avec au moins un moyen de contrôle, la figure 9A illustrant une mesure de télésurveillance de fibre de liaison en fonctionnement, et la figure 9B illustrant un test de ligne sur défaut signalé.

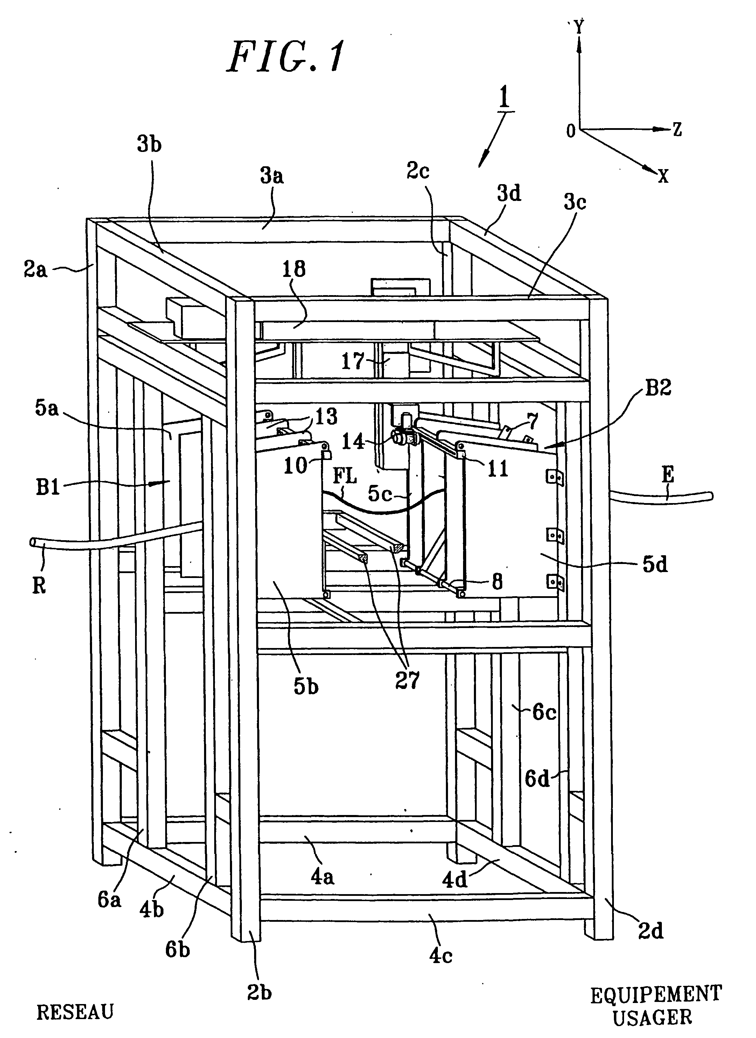

En référence à la figure 1, le répartiteur selon l'invention comprend une structure métallique 1 de forme sensiblement parallélépipédique qui comporte essentiellement quatre montants 2a, 2b, 2c et 2d, quatre traverses supérieures 3a, 3b, 3c et 3d et quatre traverses inférieures 4a, 4b, 4c et 4d. Les traverses 3b, 3d, 4b, 4d s'étendent selon une première direction X qui, dans l'exemple représenté, est horizontale. Les montants 2a, 2b, 2c, 2d s'étendent selon une seconde direction Y, qui, dans l'exemple représenté, est verticale. Les traverses 3a, 3c, 4a, 4c s'étendent quant à elles selon une troisième direction Z qui, dans l'exemple représenté, est horizontale et perpendiculaire aux directions X et Y.

Dans les parties gauche et droite supérieures de la structure 1, sont fixés respectivement des premier et second panneaux de brassage B1 et B2 qui sont symétriques par rapport à un plan vertical confondu avec le plan transversal médian du parallélépipède formé par la structure 1. Le premier panneau de brassage B1 est délimité par deux plaques de soutien 5a, 5b parallèles qui s'étendent chacune verticalement à l'intérieur de la structure 1 dans un plan formé par la direction Y et la direction Z. Les plaques 5a, 5b sont fixées respectivement par un bord vertical respectif à des poutrelles verticales 6a, 6b espacées l'une de l'autre entre les deux montants 2a, 2b de la structure 1. D'une façon analogue, le second panneau de brassage B2 est délimité par deux plaques de soutien 5c, 5d qui sont fixées respectivement par un bord vertical respectif à des poutrelles verticales 6c, 6d espacées l'une de l'autre entre les deux montants 2c, 2d de la structure 1.

Entre les deux plaques de soutien 5a, 5b, de même qu'entre les plaques de soutien 5c, 5d, sont disposés plusieurs supports 7 de modules de raccordement.

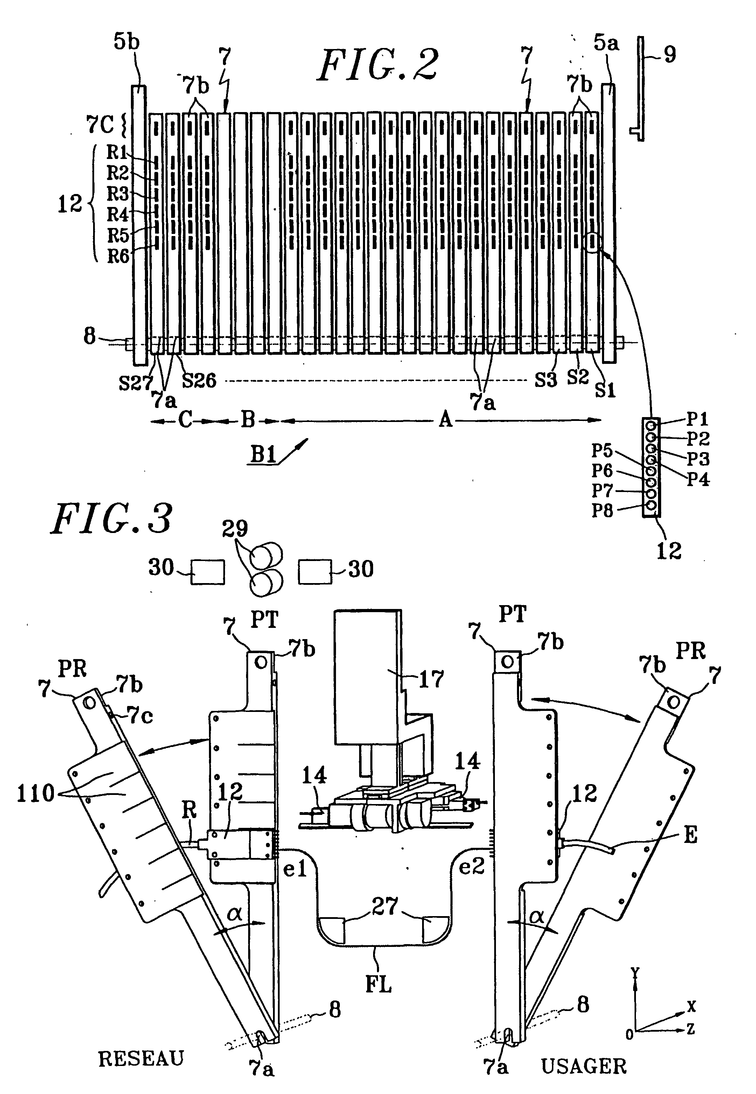

Comme on peut mieux le voir sur les figures 2 et 3, les supports 7 se présentent sous la forme de barrettes profilées parallèles.

En référence à l'ensemble des figures 1 à 3, les supports 7 comportent chacun une extrémité inférieure 7a qui est articulée autour d'une axe de rotation fixe 8 (figure 1) qui est fixé, par ses deux extrémités opposées, entre les deux plaques de soutien 5a, 5b (respectivement 5c, 5d) et qui s'étend selon la première direction X. Lesdits supports 7 comportent en outre chacun une extrémité supérieure 7b qui est solidaire d'un bras de relevage 9 (figure 2) agencé à l'une des extrémités du premier et du second panneau de brassage par tous moyens de fixation adaptés connus en tant que tels.

Ainsi, comme on peut mieux le voir sur la figure 3, chaque support 7 peut basculer d'une position de travail PT, dans laquelle le support 7 s'étend verticalement le long de la seconde direction Y, à une position de repos PR, dans laquelle le support 7 s'étend vers l'extérieur de la structure 1 en formant un angle α avec la seconde direction Y, et inversement, de sa position de repos PR à sa position de travail PT.

Afin d'assurer un positionnement correct des supports 7 en position de travail PT, l'extrémité supérieure 7b de chaque support 7 est pourvue d'une lumière 7c (figure 2) qui est destinée à coopérer avec un pion de centrage 10 (figure 1). Le pion de centrage 10 est agencé sur une traverse 11 (figure 1) qui relie les deux plaques de soutien 5a, 5b (respectivement 5c, 5d).

Comme on peut mieux le voir sur la figure 3, chaque support 7 comporte plusieurs compartiments 110, par exemple six dans l'exemple représenté, lesdits compartiments ayant tous la même taille et étant equirépartis longitudinalement le long d'une partie du support 7. Les compartiments 110 sont conformés de façon à recevoir chacun, par exemple par clipsage, un module de raccordement 12 (un seul module 12 est visible entièrement sur la figure 3), qui, dans l'exemple représenté, se présente sous la forme d'un parallélépipède mince. Un tel module de raccordement est de préférence du type décrit dans le document FR 2 774 181 auquel il convient de se reporter. Pour cette raison, il n'est pas nécessaire de donner une description détaillée d'un tel module.

Le module 12 représenté à gauche sur la figure 3 est un module qui appartient à un support 7 du premier panneau de brassage B1. Le module 12 s'étend vers la gauche pour recevoir une extrémité d'un câble de fibres optiques R provenant du réseau. Le module 12 représenté très partiellement à droite sur la figure 3 est un module qui appartient à un support 7 du second panneau de brassage B2. Ce module 12 s'étend vers la droite pour recevoir une extrémité d'un câble de fibres optiques E desservant des équipements d'usager.

Comme on peut le voir sur les figures 2 et 3, l'extrémité droite du module de raccordement 12 du premier panneau de brassage B1 est pourvue de plusieurs ports, par exemple huit, numérotés de P1 à P8, respectivement de haut en bas. Ces ports sont destinés à recevoir chacun une fiche de connexion présente à une première extrémité e1 d'une fibre de liaison FL.

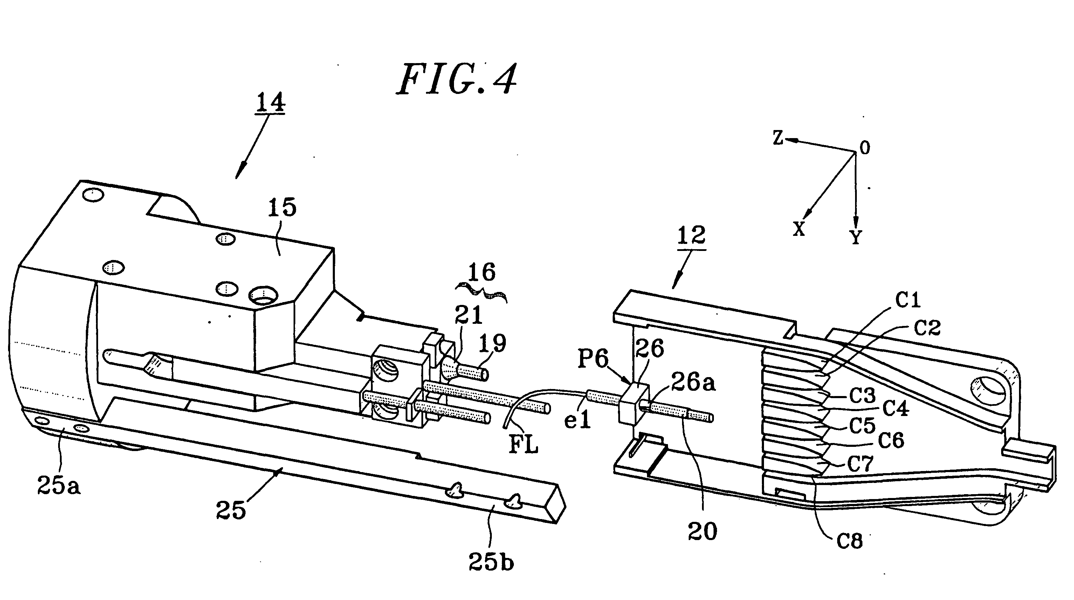

Comme on peut mieux le voir sur la figure 4 où la fiche de connexion est désignée par la référence numérique 20, ladite fiche s'étend selon la troisième direction Z et est verrouillée par rapport à un port d'un module 12, par exemple le port P6, au moyen d'un clip 26 agencé dans l'axe de ce port.

En référence à nouveau aux figures 2 et 3, l'extrémité gauche du module de raccordement 12 du second panneau de brassage B2 est, de façon analogue à l'extrémité droite du module de raccordement 12 du premier panneau de brassage B1, pourvue de huit ports destinés à recevoir chacun par enclipsage une fiche de connexion 20 présente à une seconde extrémité e2 de la fibre de liaison FL, ladite fiche s'étendant selon la troisième direction Z. Il convient de noter que le nombre de fibres de liaison FL raccordables dans un module de raccordement 12 est toujours égal au nombre de fibres optiques contenu dans un câble R.

Dans l'exemple représenté sur les figures 1 et 3, une seule fibre de liaison FL est représentée dans le but de ne pas surcharger les figures 1 et 3. Il convient en outre de noter que compte tenu de la symétrie de la structure 1, les fibres de liaison FL ont toutes la même longueur.

En référence aux figures 2 et 3, l'angle d'inclinaison α, le nombre de modules de raccordement 12 par support 7 et la distance entre le compartiment 110 le plus bas et l'axe de rotation 8 sont déterminés pour que les fibres de liaison FL, lorsque les supports 7 sont en position de repos, ne soient pas en contact avec le dispositif de connexion/déconnexion automatique qui sera décrit ci-dessous.

En référence maintenant à la figure 1, les supports 7 sont, de préférence, séparés les uns des autres par une cloison 13 qui est parallèle, selon le panneau de brassage considéré B1 ou B2, soit aux plaques de soutien 5a, 5b, soit aux plaques de soutien 5c, 5d. Chaque cloison 13 se présente par exemple sous la forme d'une feuille plastifiée de forme sensiblement rectangulaire qui est fixée, selon tous moyens appropriés, sur le panneau de brassage qui lui est associé. De cette manière, chaque support 7 est isolé de ses supports voisins de telle sorte que lors de la rotation d'un support 7, les fibres de liaison FL positionnées sur ce dernier n'entrent pas en contact avec les fibres de liaison FL ou les modules 12 des supports voisins.

En référence à nouveau à la figure 2, le panneau de brassage B1, et, de façon symétrique, le panneau de brassage B2, comprend une première partie A qui comporte une pluralité de supports 7., par exemple dix-neuf supports numérotés de S1 à S19, une seconde partie B exempte de supports 7 et apte à contenir une pluralité de supports 7, par exemple quatre supports numérotés de S20 à S23, et une troisième partie C qui comporte une pluralité de supports 7, par exemple quatre supports numérotés de S24 à S27. Les six compartiments 110 d'un quelconque support 7 du premier panneau de brassage B1 sont référencés R1 à R6, respectivement de haut en bas, tandis que les six compartiments 110 d'un quelconque support 7 du second panneau de brassage B2 sont référencés E1 à E6, respectivement de haut en bas. Les deux panneaux de brassage B1 et B2 sont disposés relativement l'un par rapport à l'autre de telle façon que:
- la zone comprise entre la première partie A du premier panneau de brassage B1 et la première partie A du second panneau de brassage B2 sert de zone fonctionnelle du répartiteur, c'est à dire qu'il s'agit d'une zone destinée à contenir les sur longueurs de fibres de liaison FL en fonctionnement qui relient un module de raccordement 12 d'un quelconque des dix-neuf premiers supports du panneau de brassage B1 à un module de raccordement 12 de l'un quelconque des dix-neuf premiers supports du panneau de brassage B2,
- la zone comprise entre la seconde partie B du panneau de brassage B1 et la seconde partie B du panneau de brassage B2 est destinée à venir en complément de la zone fonctionnelle, dans le cas par exemple où cette dernière serait entièrement utilisée,
- et la zone comprise entre la troisième partie C du premier panneau de brassage B1 et la troisième partie C du second panneau de brassage B2 sert de zone de stockage du répartiteur, c'est à dire qu'il s'agit d'une zone destinée à contenir les fibres de liaison FL non utilisées en attente de connexion dans la zone de fonctionnement. Il est fait en sorte qu'au fur et à mesure de leur stockage, les fibres de liaison FL sont installées l'une au dessus de l'autre dans la zone de stockage, à partir du port P8 du module 12 le plus bas du support 7 considéré dans le premier panneau de brassage B1 et du support 7 considéré dans le second panneau de brassage B2. Ainsi, une fois stockées, les fibres de liaison FL sont toutes parallèles.

Une telle disposition permet ainsi d'obtenir un trajet optimisé de fibres de liaison FL entre la zone fonctionnelle et la zone de stockage. Une telle optimisation du trajet facilite grandement l'installation des fibres de liaison en évitant tout risque d'emmêlement entre les fibres de liaison de la zone fonctionnelle et celles de la zone de stockage. Elle permet en outre au répartiteur de présenter une flexibilité maximale doublée d'une importante souplesse en terme de capacité, cette dernière pouvant varier entre une fourchette comprise entre une centaine et quelque milliers d'abonnés.

Enfin, l'agencement original de la zone de stockage sur un côté de la zone fonctionnelle du répartiteur rend facile d'accès la zone de stockage à un opérateur. Il permet également une bonne gestion des sur longueurs de fibres de liaison FL, chaque fibre de liaison à stocker étant translatée depuis la zone fonctionnelle de façon à éviter tout risque d'emmêlement comme c'est le cas dans les répartiteurs de l'art antérieur, où les fibres de liaison ne sont pas translatées latéralement mais déplacées plus ou moins aléatoirement au dessus du flot de fibres de liaison, ce qui génère des emmêlements de sur longueurs de fibres de liaison.

On va maintenant décrire en référence aux figures 4 à 6 le dispositif de connexion/déconnexion automatique de fibres de liaison qui est associé au répartiteur qui vient d'être décrit ci-dessus.

Il convient de noter qu'un tel dispositif n'est décrit qu'à titre d'exemple non limitatif, un tout autre dispositif de connexion/déconnexion automatique mis en oeuvre pour être adapté au répartiteur selon l'invention, pouvant de toute évidence être utilisé.

Plus particulièrement en référence à la figure 4, le dispositif de connexion/déconnexion automatique de fibres de liaison, représenté dans son ensemble sous la référence numérique 14, comporte un corps principal 15 qui, dans l'exemple représenté, présente une forme sensiblement allongée. Le corps principal 15 a une extrémité sur laquelle est fixé un élément de préhension 16 qui est destiné à saisir une extrémité de fibre de liaison FL à connecter ou à déconnecter.

Comme on peut le voir sur la figure 1, compte tenu de la symétrie entre les premier et second panneaux de brassage B1 et B2, deux dispositifs de connexion/déconnexion 14 sont utilisés, l'un associé au premier panneau de brassage B1, l'autre associé au second panneau de brassage B2. Ces deux dispositifs sont solidaires d'un même support 17 qui est fixé sur un chariot 18 susceptible de se déplacer en translation selon les directions X, Y et Z, ledit chariot étant à cet effet monté sur des rails ou glissières (non représentés). Le déplacement dudit chariot est assuré par un logiciel de supervision.

A titre de variante, il serait tout à fait possible d'utiliser un seul dispositif de connexion/déconnexion 14 au lieu de deux. Dans un tel cas, ce dispositif unique serait muni d'une tête pivotante solidaire de l'élément de préhension 16, ladite tête pouvant être orientée soit vers le panneau de brassage B1, soit vers le panneau de brassage B2.

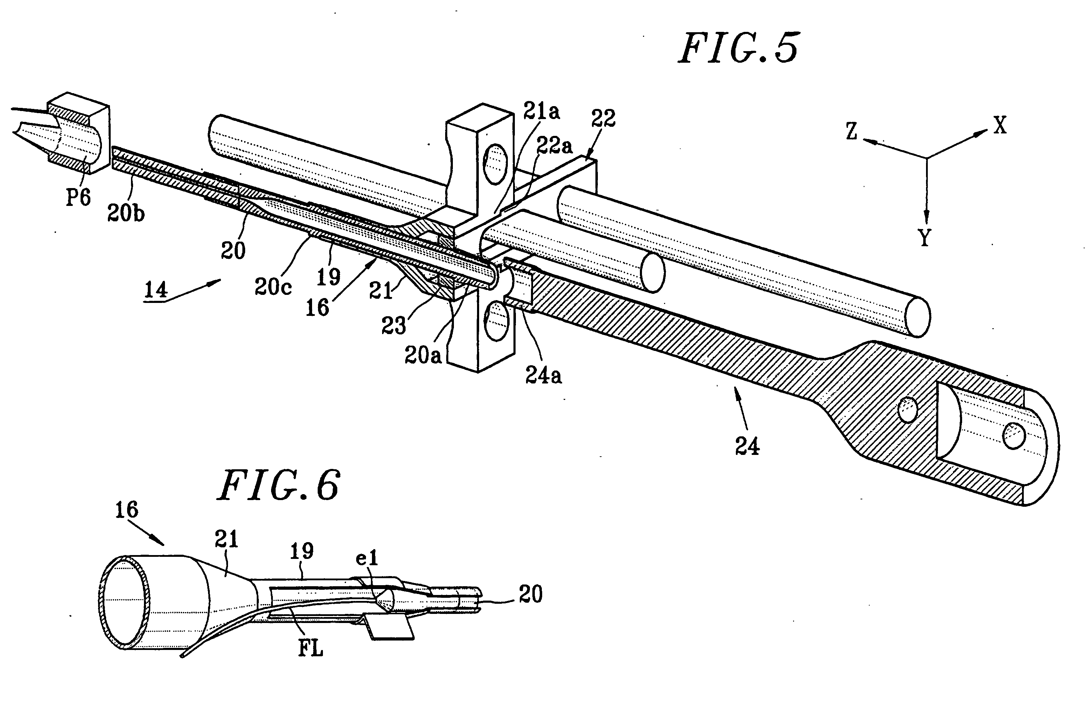

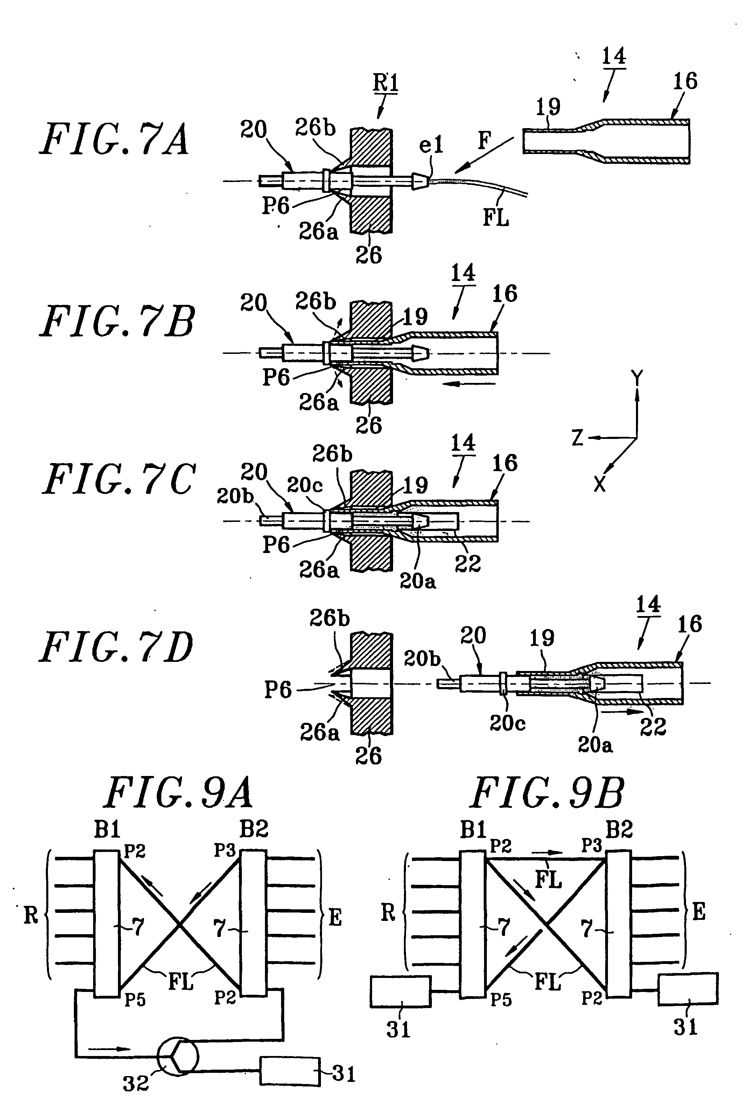

Comme on peut mieux le voir sur les figures 5 et 6, l'élément de préhension 16 comprend principalement un tube 19 fendu, dont le diamètre intérieur est très légèrement supérieur au diamètre externe d'une fiche de connexion 20 présente à une extrémité, par exemple e1, d'une fibre de liaison FL.

L'élément de préhension 16 présente un profil extérieur sensiblement tronconique 21 qui, lorsque le dispositif de connexion/déconnexion 14 est en service, s'évase en direction de l'intérieur de la structure 1 du répartiteur.

Comme on peut le voir sur la figure 6, le profil extérieur tronconique 21 joue le rôle d'un déflecteur qui guide vers le bas la fibre de liaison FL, dont la fiche de connexion 20 est saisie dans la fente du tube 19.

En référence à nouveau aux figures 4 et 5, le dispositif de connexion/déconnexion 14 est conçu de façon à ce que en vue d'une connexion ou d'une déconnexion, il se déplace transversalement par rapport au panneau de brassage B1 ou B2, en direction du module 12 dudit panneau concerné par la connexion ou la déconnexion, son élément de préhension 16 défilant alors devant des supports 7 du panneau de brassage B1 ou B2 avant d'atteindre le support 7 contenant ledit module 12. Tous les supports 7 sont à cet instant basculés en position de repos PR de telle sorte que le dispositif de connexion/déconnexion 14 ne puisse pas désorganiser ou détériorer les fibres de liaison FL connectées. Une fois que le dispositif de connexion/déconnexion 14 se trouve à proximité du support 7 concerné par la connexion ou la déconnexion, ce dernier est basculé en position verticale de travail PT, tous les autres supports 7 restant quant à eux en position repos PR.

Lorsque la fente du tube 19 avoisine le port du module 12 qui est concerné par la connexion ou la déconnexion, soit le port P6 dans l'exemple représenté sur la figure 4, l'ensemble du dispositif est complètement décalé latéralement par rapport audit module 12, le tube 19 de l'élément de préhension 16 s'étendant selon un axe parallèle à l'axe du port P6, lui-même parallèle à la troisième direction Z. Chaque extrémité fiche de connexion 20 d'une fibre de liaison FL est ainsi toujours connectée ou déconnectée dans l'axe de ce port puis translatée latéralement par rapport à l'axe de ce port. L'intérêt d'une telle disposition réside dans le fait qu'au moment d'une connexion ou d'une déconnexion, le dispositif de connexion/déconnexion 14 ne risque pas de rentrer en contact avec les fibres de liaison susceptibles d'être raccordées aux autres ports du module 12 concerné par la connexion ou la déconnexion.

En référence à nouveau à la figure 5, le dispositif de connexion/déconnexion 14 comporte un élément de maintien 22 qui est destiné à solidariser la fiche de connexion 20 de l'extrémité e1 de la fibre de liaison FL par rapport au dispositif de connexion/déconnexion 14. L'élément de maintien 22 se présente sous la forme d'une plaque de forme sensiblement rectangulaire allongée qui est montée coulissante à l'intérieur de la partie tronconique 21, le long de la direction X. La plaque est pourvue, à son extrémité la plus proche de la partie tronconique 21, d'une encoche 23 dont le contour présente une forme sensiblement correspondante à celle de la fiche de connexion 20. Ladite plaque est susceptible de coulisser entre une position de repos, dans laquelle l'axe de l'encoche 23 est décalé par rapport à l'axe de la fiche 20, et une position de travail, telle que représentée sur la figure 5, dans laquelle l'axe de l'encoche 23 est confondu avec l'axe de la fiche de connexion 20, la fiche 20 étant alors logée dans l'encoche 23. Dans cette dernière position, la plaque 22 est bloquée en position par rapport à l'élément de préhension 16, la plaque 22 étant munie à cette effet d'un épaulement externe 22a venant en butée contre un épaulement interne correspondant 21 a de la partie tronconique 21.

Le dispositif de connexion/déconnexion 14 comporte en outre un élément poussoir 24 qui se présente sous la forme d'un cylindre allongé s'étendant le long de la direction Z et monté coulissant le long de cette direction. L'élément poussoir 24 comporte une partie tubulaire 24a dont le diamètre intérieur est très légèrement supérieur au diamètre externe de la partie arrière de la fiche de connexion 20 de façon à ce que cette dernière puisse être maintenue en contact étroit à l'intérieur de la partie tubulaire 24a. L'élément poussoir 24 a pour fonction d'aider l'expulsion partielle de la fiche de connexion 20 hors de l'élément de préhension 16 au moment d'une connexion. A cet effet, l'élément poussoir 24 a la possibilité de coulisser d'une position de repos qui est la position représentée sur la figure 5, dans laquelle il est disposé dans le prolongement de la fiche de connexion 20 en arrière de cette dernière, à une position de travail, dans laquelle il entoure l'extrémité 20a de la fiche de connexion 20 opposée à l'extrémité libre 20b de cette dernière. Il convient de noter que préalablement au déplacement de l'élément poussoir 24 dans sa position de travail, l'élément de maintien 22 doit se trouver en position de repos. L'élément poussoir 24 est alors déplacé en direction de l'élément de préhension 16 jusqu'à ce que la partie tubulaire 24a soit en butée à l'intérieur de la partie tronconique 21 de l'élément de préhension 16. Un tel déplacement de l'élément poussoir 24 permet ainsi d'obtenir l'extraction partielle de la fiche de connexion 20 hors de l'élément de préhension 16.

En référence maintenant à la figure 4, le dispositif de connexion/déconnexion 14 comporte en outre un doigt de centrage 25 qui se présente sous la forme d'une barrette s'étendant le long de la direction Z, au delà du tube 19 de l'élément de préhension 16, d'une distance par exemple de 13 mm, ledit doigt étant décalé latéralement par rapport à l'axe du tube 19. Une première extrémité 25a dudit doigt est fixée sur le corps principal 15 du dispositif de connexion/déconnexion 14, tandis que la seconde extrémité 25b pointe vers le module 12 concerné par la connexion ou la déconnexion d'une fibre de liaison FL.

Lorsque le dispositif de connexion/déconnexion 14 est très proche du module 12 et avant la connexion ou la déconnexion, l'extrémité 25b du doigt de centrage 25 pénètre dans un compartiment C6 du module 12 qui forme une encoche décalée latéralement par rapport à l'axe du port P6 concerné par la connexion ou la déconnexion, ceci de façon à positionner le dispositif de connexion/déconnexion 14 d'une manière stable et précise par rapport au module 12. Comme cela est représenté, le module 12 comporte un nombre de compartiments qui est égal au nombre de ports P1 à P8 du module 12, soit huit compartiments C1 à C8 équirépartis sur toute la hauteur du module 12.

Enfin, le dispositif de connexion/déconnexion 14 comporte également un capteur (non représenté) qui permet de détecter que dans le cas d'une connexion, la fibre de liaison FL n'est plus dans le dispositif de connexion/déconnexion 14, et que dans le cas d'une déconnexion, la fibre de liaison FL est en position dans le dispositif de connexion/déconnexion 14.

On va maintenant décrire, en référence à l'ensemble des figures 1 à 8, les différentes étapes aboutissant à la connexion d'une fibre de liaison FL en attente de connexion dans la zone de stockage du répartiteur.

En référence aux figures 1 et 2, le dispositif de connexion/déconnexion 14 orienté vers le premier panneau de brassage B1 est entraîné en translation au dessus du flot de fibres de liaison FL en fonctionnement, le long de la direction X, en direction d'un support 7 choisi parmi la pluralité de support S24 à S27 de la troisième partie C du premier panneau de brassage B1. Tous les supports 7 du premier panneau B1 sont alors basculés dans leur position de repos PR. Dès que le dispositif 14 parvient à proximité du support 7 concerné par la déconnexion d'une première extrémité e1 de fibre de liaison FL, par exemple le support S25, ledit support est basculé vers le haut dans sa position de travail PT.

Comme on peut le voir sur la figure 7A, le dispositif de connexion/déconnexion 14 est alors déplacé selon les directions X, Y et Z de façon à positionner l'extrémité libre du tube 19 de l'élément de préhension 16 dans l'axe de la fiche de connexion 20 d'une première extrémité e1 de fibre de liaison FL, ladite fiche 20 étant verrouillée dans un port de module 12 concerné par la déconnexion, par exemple le port P6 du module R1. A cet effet, le logiciel de supervision est programmé de telle sorte que le positionnement de l'extrémité libre du tube 19 s'effectue automatiquement par rapport à cette fiche 20 qui est nécessairement la plus haute dans la zone de stockage, ceci afin d'éviter tout risque d'emmêlement des sur longueurs de fibres de liaison FL connectées.

Le positionnement en X, Y, Z du dispositif de connexion/déconnexion 14 par rapport à l'axe de la fiche 20 ou du port P6 considéré est particulièrement avantageux dans le sens où il n'est pas nécessaire de faire appel à d'autres axes de commande du dispositif de connexion/déconnexion automatique 14, ce qui permet de réduire les coûts d'automatisation des déplacements de ce dispositif. Une telle disposition a également l'avantage d'entraîner une diminution du risque de pannes, à laquelle s'ajoute une réduction optimale de l'encombrement créé par la présence du nombre de rails de guidage limité à trois du chariot 18 qui supporte les deux dispositifs de connexion/déconnexion automatique 14.

Comme on peut le voir sur la figure 7B, une fois que l'étape précitée a été effectuée, le dispositif de connexion/déconnexion 14 est entraîné en translation le long de la direction Z de façon à ce que le tube 19 pénètre dans le port P6, la partie arrière de la fiche 20 étant alors entourée par le tube 19, lui-même entouré par le clip 26 correspondant au port P6. La translation en Z du dispositif de connexion/déconnexion 14 se poursuit jusqu'à ce que l'extrémité libre du tube 19 vienne en butée contre une saillie annulaire externe 20c formée sur la partie frontale de la fiche 20, ceci ayant pour effet d'écarter deux pattes élastiques diamétralement opposées 26a, 26b du clip 26.

Au cours des deux étapes précitées, il est à noter que l'élément de maintien 22 et l'élément poussoir 24 (fig.5) du dispositif de connexion/déconnexion 14 sont tous deux en position de repos.

Comme on peut le voir sur la figure 7C, l'élément de maintien 22 est alors entraîné en translation selon la direction X en direction de la fiche 20 de façon à ce que l'extrémité arrière 20a de cette dernière pénètre dans l'encoche 23 de l'élément de maintien 22, comme cela a été décrit plus haut dans la description. La fiche 20 est ainsi rendue solidaire de l'élément de préhension 16 du dispositif de connexion/déconnexion 14.

Comme on peut le voir sur la figure 7D, le dispositif de connexion/déconnexion 14 est entraîné en translation selon la direction Z à l'opposé du port P6, la saillie 20c de la fiche 20 écartant, lors de son passage dans le clip 26, les pattes 26a, 26b de ce dernier qui reviennent ensuite par élasticité à leur état de repos initial. La fiche 20 de l'extrémité e1 de la fibre de liaison FL est alors déconnectée.

Une fois cette étape terminée, le support S25 est basculé en position de repos PR et le dispositif de connexion/déconnexion automatique 14 est entraîné en translation au dessus du flot de fibres de liaison en fonctionnement, le long de la direction X en direction d'un support 7 choisi parmi la pluralité de support S1 à S19 de la première partie A du premier panneau de brassage B1. Dés que le dispositif 14 parvient à proximité du support 7 concerné par la connexion de la première extrémité e1 de fibre de liaison FL, par exemple le support S17, ledit support est basculé vers le haut dans sa position de travail PT.

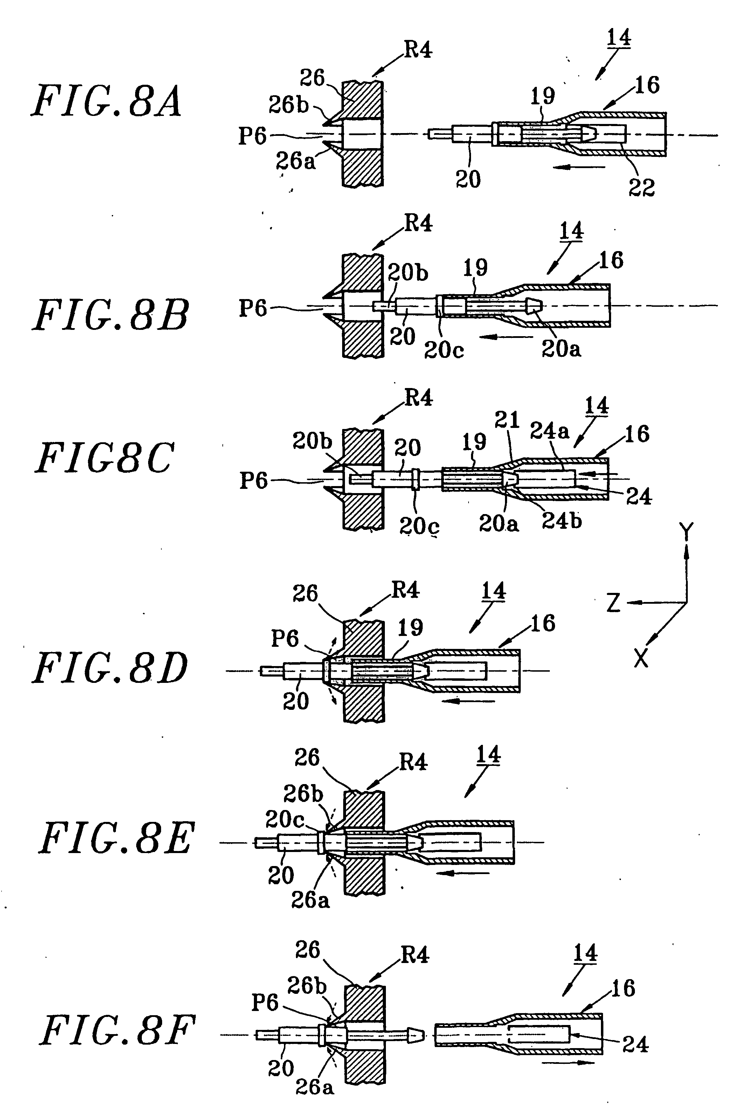

Comme on peut le voir sur la figure 8A, le dispositif de connexion/déconnexion 14 est alors déplacé selon les directions X, Y et Z de façon à positionner l'extrémité libre du tube 19 de l'élément de préhension 16, en prise avec ladite fiche 20 à connecter, dans l'axe d'un port de module de raccordement 12 qui est concerné par la connexion de la fiche 20 de l'extrémité e1, par exemple le port P6 du module R4. Le logiciel de supervision est programmé de telle façon que l'extrémité avant 20b de la fiche 20 soit positionnée à proximité immédiate de l'embouchure du port P6 du module R4.

Comme cela est représenté sur la figure 8B, l'élément de maintien 22 est ensuite entraîné en translation selon la direction X dans sa position de repos, de façon à désolidariser la fiche 20 de l'élément de préhension 16.

Comme on peut le voir sur la figure 8C, l'élément poussoir 24 est alors entraîné en translation selon la direction Z en direction du port P6 de façon à ce que l'extrémité libre 24b de sa partie tubulaire 24a soit en prise avec l'extrémité arrière 20a de la fiche 20. La translation en Z de l'élément poussoir 24 se poursuit jusqu'à ce que l'extrémité libre 24b de sa partie tubulaire 24a parvienne en butée à l'intérieur de la partie tronconique 21 de l'élément de préhension 16, ceci ayant pour effet de faire sortir partiellement la fiche 20, hors du tube 19 de l'élément de préhension 16.

Comme on peut le voir sur la figure 8D, une fois que l'étape précitée a été effectuée, le dispositif de connexion/déconnexion 14 est entraîné en translation le long de la direction Z de façon à ce que le tube 19 pénètre dans le port P6, la partie arrière de la fiche 20 étant alors entourée par le tube 19, lui-même entouré par le clip 26 correspondant au port P6.

Comme on peut le voir sur la figure 8E, la translation en Z du dispositif de connexion/déconnexion 14 se poursuit de façon à ce que la saillie annulaire 20c de la fiche 20 écarte les deux pattes élastiques 26a, 26b du clip 26. La translation en Z du dispositif de connexion/déconnexion 14 s'arrête alors lorsque les pattes 26a, 26b du clip sont revenues à leur état de repos initial, après passage de la saillie 20c dans le clip 26, les pattes 26a, 26b venant en butée contre la saillie 20c.

Comme on peut le voir sur la figure 8F, la fiche 20 est verrouillée dans le port P6, c'est à dire connectée, de sorte que le dispositif de connexion/déconnexion 14 peut être entraîné en translation selon la direction Z à l'opposé du port P6.

Le support S17 est alors basculé en position de repos PR.

En référence aux figures 1 et 2, le dispositif de connexion/déconnexion 14 orienté vers le second panneau de brassage B2 est entraîné à son tour en translation au dessus du flot de fibres de liaison FL en fonctionnement, le long de la direction X, en direction du support S25 de la troisième partie C du second panneau de brassage B2. Comme cela a été évoqué précédemment, ledit support est obligatoirement concerné par la déconnexion d'une seconde extrémité e2 de la fibre de liaison FL, le répartiteur étant conçu pour que les extrémités e1, e2 de chaque fibre de liaison FL connectée dans la zone de stockage soient situées au même niveau, ceci afin d'éviter tout risque d'emmêlement des fibres de liaison FL connectées dans la zone de stockage. Tous les supports 7 du second panneau de brassage B2 sont alors basculés dans leur position de repos PR. Dès que le dispositif de connexion/déconnexion 14 parvient à proximité du support S25, ledit support est basculé vers le haut dans sa position de travail PT.

Des étapes en tout point similaires à celles décrites en référence aux figures 7A à 8F sont alors réitérées.

Il est bien évident que le support 7 de la première partie A du second panneau de brassage B2 n'est pas obligatoirement le support S17, le choix du support 7 étant fonction du câble E que l'on souhaite raccorder au câble R.

Une fois ces étapes terminées, la fibre de liaison FL est connectée dans la zone fonctionnelle du répartiteur, comme cela est représenté sur la figure 3.

On va maintenant décrire, en référence à la figure 3, les différentes étapes aboutissant à la déconnexion d'une fibre de liaison FL dans la zone fonctionnelle et à la connexion de cette fibre dans la zone de stockage du répartiteur.

Pour simplifier l'exemple, on va décrire la déconnexion et le stockage de la fibre de liaison FL dont la connexion vient d'être décrite ci-dessus, en se référant aux mêmes supports dans la zone fonctionnelle, à savoir les supports S17, et aux mêmes supports dans la zone de stockage, à savoir les supports S25.

De manière préférentielle, les étapes de déconnexion d'une fibre de liaison FL et les étapes de connexion de cette fibre dans la zone de stockage ne constituent pas les étapes inverses de celles qui viennent d'être décrites ci-dessus en référence aux figures 7A à 8F. En effet, une simple inversion de ces étapes provoquerait un emmêlement des fibres de liaison FL qui n'est pas souhaitable, car susceptible de nuire au bon fonctionnement du répartiteur.

Les étapes qui vont être décrites ci-dessous font appel à trois éléments supplémentaires associés au répartiteur, ces éléments étant représentés sur la figure 3.

Un premier de ces éléments consiste en au moins une barre 27, de préférence deux barres dans l'exemple représenté, lesdites barres s'étendant selon la direction X, respectivement devant les premier et second panneaux de brassage B1, B2, comme cela est visible sur la figure 1. La figure 1 représente le cas où les barres 27 sont basculées en position relevée, une telle position étant adoptée lors de la connexion d'une fibre de liaison FL dans la zone fonctionnelle du répartiteur.

La figure 3 représente le cas où les barres 27 sont basculées en position basse de façon à concentrer vers le bas de la structure 1 du répartiteur le flot de fibres de liaison FL connectées. Comme cela sera décrit de façon plus détaillée dans la suite de la description, l'extraction d'une fibre de liaison FL hors de la zone fonctionnelle est ainsi facilitée, le flot de fibres de liaison FL en fonctionnement étant maintenu dans la partie inférieure de la zone fonctionnelle du répartiteur.

Un second de ces éléments consiste en une paire de rouleaux 29 qui s'étendent le long de la direction X au dessus de la traverse 11 (figure 1) d'un des panneaux de brassage, par exemple le panneau B1 dans l'exemple représenté sur la figure 3. Les rouleaux 29 sont agencés l'un par rapport à l'autre de telle façon qu'ils puissent s'éloigner selon la direction Y ou, au contraire, se rapprocher selon cette direction en vue d'enserrer la fibre de liaison FL déconnectée dans la zone fonctionnelle du répartiteur. L'un de ces rouleaux est motorisé tandis que l'autre est en rotation libre. Les rouleaux 29 sont de préférence recouverts d'une matière élastiquement déformable, par exemple du caoutchouc, de façon à épouser la forme de la fibre de liaison FL qui passe entre ces derniers. La mise en rotation des rouleaux 29 entraîne le défilement de la fibre de liaison qui peut ainsi être extraite de la zone fonctionnelle du répartiteur préalablement à sa connexion dans la zone de stockage.

Le troisième de ces éléments consiste en une paire de pinces 30 susceptibles d'être entraînées chacune en translation selon les directions X et Z. Dans l'exemple représenté sur la figure 1, les pinces 30 (non représentées) sont, comme les dispositifs de connexion/déconnexion automatique 14, guidées par le chariot 18, dans l'objectif de se passer d'un autre chariot de guidage qui augmenterait l'encombrement du répartiteur.

Comme on peut le voir sur la figure 3, une première pince 30 est dédiée au premier panneau de brassage B1, tandis que la seconde pince 30 est dédiée au second panneau de brassage B2. La première pince 30 est également susceptible de pivoter vers l'extérieur de la structure 1 du répartiteur, par rapport à l'axe 8 de rotation des supports 7, d'un angle d'environ 120°.

Avant de procéder à la déconnexion de la fibre de liaison FL, les barres 27 sont basculées dans leur position basse.

Le dispositif de connexion/déconnexion 14 orienté vers le second panneau de brassage B2 est entraîné en translation au dessus du flot de fibres de liaison en fonctionnement, le long de la direction X, en direction du support 7 associé à la fiche 20 de la fibre de liaison FL à déconnecter, qui, dans l'exemple considéré, est le support S17 de la première partie A du second panneau de brassage B2. Tous les supports 7 du second panneau de brassage B2 sont alors basculés dans leur position de repos PR.

Dès que le dispositif de connexion/déconnexion automatique 14 parvient à proximité du support S17, ledit support est basculé vers le haut dans sa position de travail PT.

Le dispositif de connexion/déconnexion 14 procède alors à la déconnexion de la fiche 20 de la seconde extrémité e2 de fibre de liaison FL, de la même façon que ce qui a été décrit en référence aux figures 7A à 7D.

La seconde pince 30 est entraînée en translation selon la direction X de façon à se positionner sensiblement en face du dispositif de connexion/déconnexion 14. Ce dernier est entraîné en translation selon la direction Z de façon à s'approcher le plus près possible de la seconde pince 30. Cette dernière est actionnée de façon à saisir la fiche 20 en prise dans le tube 19 de l'élément de préhension 16 du dispositif de connexion/déconnexion 14. Une fois cette opération effectuée, l'élément de maintien 22 du dispositif de connexion/déconnexion 14 est entraîné en translation dans sa position de repos.

Le dispositif de connexion/déconnexion automatique 14 est écarté de la seconde pince 30 qui est actionnée à l'ouverture de façon à lâcher la fiche 20 de l'extrémité e2 de la fibre de liaison FL sur les barres 27 qui séparent ainsi ladite fibre de liaison FL du flot de fibres de liaison FL en fonctionnement.

Le dispositif de connexion/déconnexion 14 orienté vers le premier panneau de brassage B1 est entraîné à son tour en translation au dessus du flot de fibres de liaison en fonctionnement, le long de la direction X, en direction du support 7 associé à la fiche 20 de la fibre de liaison FL à déconnecter, qui, dans l'exemple considéré, est le support S17 de la première partie A du premier panneau de brassage B1. Tous les supports 7 du premier panneau de brassage B1 sont alors basculés dans leur position de repos PR.

Dès que le dispositif de connexion/déconnexion automatique 14 parvient à proximité du support S17, ledit support est basculé vers le haut dans sa position de travail PT.

Le dispositif de connexion/déconnexion 14 procède alors à la déconnexion de la fiche 20 de la première extrémité e1 de fibre de liaison FL, de la même façon que ce qui a été décrit en référence aux figures 7A à 7D.

Le dispositif de connexion/déconnexion 14 est ensuite entraîné en translation selon la direction Z de façon à s'approcher le plus près possible de la première pince 30. Cette dernière est actionnée de façon à saisir la fiche 20 en prise dans le tube 19 de l'élément de préhension 16 du dispositif 14. Une fois cette opération effectuée, l'élément de maintien 22 du dispositif de connexion/déconnexion automatique 14 est entraîné en translation dans sa position de repos et le dispositif de connexion/déconnexion automatique 14 est écarté de la première pince 30. La première pince 30 est ensuite entraînée en translation selon la direction Z de façon à se positionner légèrement en arrière du support S17 du premier panneau de brassage B1. La première pince 30 est alors entraînée en rotation vers l'extérieur de la structure 1 du répartiteur ce qui a pour effet de ramener au moins une partie de la fibre de liaison FL à extraire en dehors de la zone fonctionnelle du répartiteur.

La paire de rouleaux 29 est entraînée en translation selon la direction X de façon à atteindre le support S17 du premier panneau de brassage B1. Les rouleaux 29 sont écartés l'un de l'autre de part et d'autre de la fibre de liaison FL à extraire, puis rapprochés l'un vers l'autre de façon à venir en prise avec ladite fibre. Les rouleaux 29 sont alors entraînés en rotation, ce qui fait défiler la fibre de liaison FL vers le côté extérieur gauche de la structure 1 du répartiteur, jusqu'à ce que la fiche 20 de la seconde extrémité e2 de ladite fibre de liaison FL vienne en butée entre les deux rouleaux, ce qui a pour effet de faire cesser la rotation de ces derniers. Une fois cette opération terminée, la fibre de liaison FL forme une boucle sur la gauche du répartiteur, en bordure de sa structure 1.

Au cours d'une étape suivante, les rouleaux 29 et les deux pinces 30 sont entraînés en translation selon la direction X vers la zone de stockage. La seconde pince 30 est alors entraînée selon la direction Z vers les rouleaux 29 de façon à s'approcher le plus près possible de la fiche 20 de la seconde extrémité e2 de la fibre de liaison FL qui est en prise dans les rouleaux 29. La seconde pince 30 saisit ladite fiche, puis est translatée selon la direction Z de façon à se positionner devant le dispositif de connexion/déconnexion automatique 14 associé au second panneau de brassage B2. A cet effet, les rouleaux sont mis temporairement en rotation pour conférer du "mou" à la fibre de liaison, de façon à ce que cette dernière ne subisse pas une traction trop importante lors de la translation en Z de la seconde pince 30.

Ledit dispositif de connexion/déconnexion 14 récupère la fiche 20 dans la seconde pince 30 puis est translaté selon la direction X de façon à se positionner devant le support S25 du second panneau de brassage B2.

Le dispositif de connexion/déconnexion 14 procède alors à la connexion de la seconde extrémité e2 de la fibre de liaison FL sur le support S25 du second panneau de brassage B2, de la même façon que ce qui a été décrit en référence aux figures 8A à 8F.

Les rouleaux 29 sont mis à nouveau temporairement en rotation de façon à ce que lorsque la première pince 30 est basculée vers l'intérieur de la structure 1 du répartiteur, il n'y ait pas de risque d'engendrer de "mou" sur la fibre de liaison FL au dessus du second panneau de brassage B2.

Les rouleaux 29 sont écartés et la première pince 30 est translatée selon la direction Z de façon à se positionner devant le dispositif de connexion/déconnexion automatique 14 associé au premier panneau de brassage B1.

Le dispositif de connexion/déconnexion 14 récupère la fiche 20 dans la première pince 30 puis est translaté selon la direction X de façon à se positionner devant le support S25 du premier panneau de brassage B1.

Le dispositif de connexion/déconnexion 14 procède alors à la connexion de la première extrémité e1 de la fibre de liaison FL sur le support S25 du premier panneau de brassage B1, de la même façon que ce qui a été décrit en référence aux figures 8A à 8F.

Une fois cette opération terminée, la fibre de liaison FL est connectée dans la zone de stockage du répartiteur et est ainsi prête pour une connexion ultérieure dans la zone fonctionnelle.

Le principe du répartiteur qui vient d'être décrit ci-dessus permet une intégration facile de fonctions avancées telles que par exemple la télésurveillance, la demande couplée ou encore le test de ligne sur défaut signalé.

La figure 9A représente un exemple de mise en oeuvre de la fonction télésurveillance. Comme on peut le voir sur cette figure, des ports dédiés à la télésurveillance sont repérés sur des modules de raccordement 12. Dans l'exemple représenté, il s'agit du port P2 d'un module 12 du premier panneau de brassage B1, du port P5 d'un autre module 12 du premier panneau de brassage B1, du port P3 d'un module 12 du second panneau de brassage B2, et du port P2 d'un autre module 12 du second panneau de brassage B2.

Pour effectuer la télésurveillance, deux fibres de liaison FL sont nécessaires, l'une reliant les deux ports P2, l'autre reliant les ports P3 et P5. Lesdites fibres de liaison sont en outre reliées à un moyen de contrôle 31, tel que par exemple un réflectomètre, au moyen d'un coupleur 32.

La figure 9B représente un exemple de mise en oeuvre d'un test de lignes sur défaut signalé soit du côté réseau, soit du côté équipement.

Comme on peut le voir sur cette figure, lorsqu'un défaut est signalé sur, par exemple, la fibre de liaison FL reliant le port P2 d'un module 12 d'un support 7 du premier panneau de brassage B1 au port P3 d'un module 12 d'un support 7 du second panneau de brassage B2, la fibre de liaison FL est extraite automatiquement par le dispositif de connexion/déconnexion 14. Une fibre de liaison FL dont une extrémité est reliée à un moyen de contrôle 31, tel que par exemple un réflectomètre, est alors connectée automatiquement par le dispositif de connexion/déconnexion 14. L'extrémité de la fibre qui n'est pas reliée au réflectomètre 31 est soit connectée au port P3 du second panneau de brassage B2 pour un contrôle côté équipement, soit au port P2 du premier panneau de brassage B1 pour un contrôle côté réseau.

Dans le cas où un test de lignes doit être effectué à la fois du côté équipement et du côté réseau, comme c'est le cas de la figure 9B, un seul moyen de contrôle 31 peut être utilisé au lieu de deux, par exemple par l'intermédiaire d'un commutateur susceptible d'être relié sélectivement aux fibres de liaison de mesure.

## Revendications

1. Répartiteur de fibres optiques comprenant :
- des premier (B1) et second (B2) panneaux de brassage situés en vis-à-vis,
- au moins un premier support (7) de modules de raccordement (12) appartenant à chaque panneau, chaque module du premier panneau étant adapté pour être connecté à une extrémité d'une fibre optique (R) d'un premier groupe et chaque module du second panneau étant adapté pour être connecté à une extrémité d'une fibre optique (E) d'un second groupe, une fibre optique du premier groupe étant destinée à être reliée à une fibre optique du second groupe par l'intermédiaire d'une fibre de liaison (FL) qui comporte deux extrémités (e1, e2) reçues respectivement dans un port d'un des modules du premier panneau et dans un port d'un des modules du second panneau,
**caractérisé en ce que** :
lesdits premier et second panneaux comportent chacun au moins un second support (7) de modules de raccordement, lesdits seconds supports coopérant entre eux pour former une zone de stockage de fibres de liaison (FL) non utilisées.

2. Répartiteur selon la revendication 1, dans lequel lesdits seconds supports sont agencés l'un en face de l'autre.

3. Répartiteur selon la revendication 1 ou 2, dans lequel les fibres de liaison (FL) non utilisées sont reliées parallèlement les unes aux autres entre le second support (7) du premier panneau (B1) et le second support (7) du second panneau (B2), chaque fibre de liaison étant, au fur et à mesure du stockage, agencée directement au dessus de celle qui la précède.

4. Répartiteur selon l'une quelconque des revendications 1 à 3, dans lequel les fibres de liaison (FL) ont toutes la même longueur.

5. Répartiteur selon la revendication 1, dans lequel les premier et second panneaux de brassage possèdent chacun des premiers et seconds côtés opposés qui s'étendent respectivement selon des première (X) et seconde (Y) directions, les premier et second supports (7) de modules de raccordement du premier panneau de brassage, de même que les premier et second supports (7) de modules de raccordement du second panneau de brassage, étant montés à rotation autour d'un axe respectif (8) s'étendant selon la première direction (X), de telle sorte que chaque support (7) est adapté pour basculer entre une position de repos (PR), dans laquelle le support (7) s'étend vers l'extérieur du répartiteur en formant un angle (α) avec la seconde direction (Y), et une position de travail (PT), dans laquelle le support s'étend selon la seconde direction (Y).

6. Répartiteur selon la revendication 1, dans lequel chacun des seconds supports (7) de modules de raccordement est agencé sur un côté du panneau de brassage qui lui est associé.

7. Répartiteur selon la revendication 1, dans lequel les deux extrémités respectives (e1,20; e2,20) de chaque fibre de liaison (FL) s'étendent selon une troisième direction (Z).

8. Répartiteur selon la revendication 1, dans lequel au moins un moyen de contrôle (31) est apte à tester à distance toute fibre optique (R) du premier groupe ou toute fibre optique (E) du second groupe, ou les deux, en continu ou sur défaut signalé.

9. Procédé de connexion d'une fibre de liaison (FL) dans le répartiteur selon l'une quelconque des revendications 1 à 8,
comprenant les étappes suivantes:
- a) on déplace le dispositif dans la zone de stockage.
- b) on déconnecte une première extrémité (e1, 20) de fibre de liaison (FL) qui est connectée sur le second support (7) du premier panneau de brassage (B1) dans ladite zone de stockage,
- c) on transfère ladite première extrémité (e1. 20) de fibre en direction du premier support (7) du premier panneau de brassage (B1),
- d) on connecte ladite première extrémité (e1, 20) de fibre dans un port d'un module (12) dudit premier support,
- e) on déplace le dispositif dans la zone de stockage,
- f) on déconnecte une seconde extrémité (e2, 20) de fibre qui est connectée sur le second support (7) du second panneau de brassage (B2) dans ladite zone de stockage,
- g) on transfère ladite seconde extrémité (e2, 20) de fibre en direction du premier support (7) du second panneau de brassage (B2),
- h) on connecte ladite seconde extrémité (e2, 20) de fibre dans un port d'un module (12) dudit premier support (7) du second panneau de brassage (B2).

10. Procédé selon la revendication 9, dans lequel la fibre de liaison (FL) à déconnecter dans la zone de stockage est située au niveau le plus haut dans cette zone.

11. Procédé selon la revendication 9, dans lequel la connexion de ladite fibre de liaison (FL) est effectuée au dessus du flot de fibres de liaison en fonctionnement.

12. Procédé de déconnexion d'une fibre de liaison (FL) dans le répartiteur selon l'une quelconque des revendications 1 à 8,
comprenant les étappes suivantes :
- a) on déplace le dispositif dans la zone comprise entre le premier support (7) du premier panneau de brassage (B1) et le premier support (7) du second panneau de brassage (B2),
- b) on déconnecte une seconde extrémité (e2,20) de ladite fibre qui est connectée sur le premier support (7) du second panneau de brassage (B2),
- c) on libère ladite seconde extrémité (e2,20) de fibre dans le flot de fibres de liaison (FL) en fonctionnement,
- d) on déconnecte une première extrémité (e1, 20) de la fibre qui est connectée sur le premier support (7) du premier panneau de brassage (B1),
- e) on extrait ladite fibre de liaison (FL) du répartiteur au moyen d'un dispositif d'extraction,
- f) on connecte ladite fibre de liaison (FL) dans la zone de stockage.

13. Procédé selon la revendication 12, dans lequel l'étape e) consiste en une traction de ladite fibre de liaison (FL) par ladite première extrémité (e1, 20).

14. Procédé selon la revendication 13, dans lequel la traction de la fibre de liaison (FL) est effectuée au dessus du premier panneau de brassage (B1).

15. Procédé selon la revendication 12, dans lequel le dispositif d'extraction de fibre de liaison comprend une paire de rouleaux (29) entre lesquels passe ladite fibre de liaison (FL), lesdits rouleaux étant susceptibles d'être entraînés en rotation de façon à faire défiler ladite fibre de liaison.

16. Procédé selon la revendication 15, dans lequel les rouleaux (29) sont recouverts d'une matière élastiquement déformable de façon à épouser la forme de ladite fibre de liaison lors de son passage entre les rouleaux.

17. Procédé dans lequel aux étapes b) et f) du procédé selon la revendication 9 et aux étapes b) et d) du procédé selon la revendication 12 :
- 1) on déplace le dispositif selon les première (X), seconde (Y) et troisième (Z) directions à proximité d'un port d'un module de raccordement d'un support (7) en position travail, port auquel est connectée ladite extrémité de fibre, afin de positionner l'élément de préhension (16) sensiblement dans l'axe dudit port,
- 2) on déplace, selon la troisième direction (Z), le dispositif en direction du module de raccordement (12) jusqu'à ce que ladite extrémité de fibre pénètre dans la fente (19) de l'élément de préhension (16),
- 3) on déplace, selon la première direction (X), l'élément de maintien (22) dans sa position de travail de façon à solidariser ladite extrémité de fibre avec ce dernier,
- 4) on déplace, selon la troisième direction (Z), le dispositif dans la direction inverse de celle du module de raccordement (12), à une distance proche de ce dernier,
- 5) on bascule ledit support (7) en position repos.

18. Procédé, dans lequel, aux étapes d) et h) du procédé selon la revendication 9 et à l'étape f) du procédé selon la revendication 12,
- 1) on déplace le dispositif selon les première (X), seconde (Y) et troisième (Z) directions à proximité d'un port d'un module de raccordement (12) du support (7) en position travail, port auquel est destinée à être connectée ladite extrémité de fibre, afin de positionner l'élément de préhension (16) sensiblement dans l'axe dudit port,
- 2) on déplace, selon la première direction (X), ledit élément de maintien (22) dans sa position de repos de façon à désolidariser de l'élément de maintien (22) ladite extrémité de fibre à connecter,
- 3) on déplace, selon la troisième direction (Z), l'élément poussoir (24) en direction du module de raccordement (12) de façon à faire sortir ladite extrémité de fibre de l'élément de préhension (16),
- 4) on déplace, selon la troisième direction (Z), le dispositif en direction du module de raccordement (12) jusqu'à ce que ladite extrémité de fibre soit connectée à ce dernier,
- 5) on déplace, selon la troisième direction (Z), le dispositif dans la direction inverse de celle du module de raccordement (12).

## Patentansprüche

1. Verteiler für optische Fasern, der aufweist:
- ein erstes (B1) und ein zweites (B2) Einschubelement, die einander gegenüberliegend angeordnet sind,
- mindestens einen ersten Träger (7) für Anschlussmodule (12), die zu jedem Einschubelement gehören, wobei jedes Modul des ersten Einschubelements dafür ausgelegt ist, an einem Ende einer optischen Faser (R) einer ersten Gruppe angeschlossen zu sein, und jedes Modul des zweiten Einschubelements dafür ausgelegt ist, an einem Ende einer optischen Faser (E) einer zweiten Gruppe angeschlossen zu sein, wobei eine optische Faser der ersten Gruppe dazu bestimmt ist, mit einer optischen Faser der zweiten Gruppe mittels einer Verbindungsfaser (FL) verbunden zu werden, die zwei Enden (e1, e2) aufweist, die jeweils in einer Öffnung eines der Module des ersten Einschubelements und in einer Öffnung eines der Module des zweiten Einschubelements aufgenommen sind,
**dadurch gekennzeichnet,**
**dass** das erste und das zweite Einschubelement jedes mindestens einen zweiten Träger (7) für Anschlussmodule aufweisen, wobei die zweiten Träger miteinander zusammenwirken, um einen Aufbewahrungsbereich für unbenutzte Verbindungsfasern (FL) zu bilden.

2. Verteiler nach Anspruch 1, bei dem die zweiten Träger einander gegenüberliegend angeordnet sind.

3. Verteiler nach Anspruch 1 oder 2, bei dem die nicht benutzten Verbindungsfasern (FL) parallel zueinander zwischen dem zweiten Träger (7) des ersten Einschubelements (B1) und dem zweiten Träger (7) des zweiten Einschubelements (B2) verbunden sind, wobei jede Verbindungsfaser nach und nach bei der Aufbewahrung unmittelbar oberhalb der ihr vorhergehenden angeordnet ist.

4. Verteiler nach einem der Ansprüche 1 bis 3, bei dem die Verbindungsfasern (FL) alle die gleiche Länge haben.

5. Verteiler nach Anspruch 1, bei dem das erste und das zweite Einschubelement jeweils erste und zweite sich gegenüberliegende Seiten aufweisen, die sich jeweils in erste (X) und zweite (Y) Richtungen erstrecken, wobei die ersten und zweiten Träger (7) für Anschlussmodule des ersten Einschubelements wie auch die ersten und zweiten Träger (7) der Anschlussmodule des zweiten Einschubelements derart rotierbar um eine jeweilige Achse (8), die sich längs der ersten Richtung (X) erstreckt, angeordnet sind, dass jeder Träger (7) ausgebildet ist, um zwischen einer Ruhestellung (PR), in der der Träger (7) sich zur Außenseite des Verteilers erstreckt und dabei einen Winkel (α) mit der zweiten Richtung (Y) bildet, und einer Arbeitsstellung (PT) zu kippen, in der der Träger sich längs der zweiten Richtung (Y) erstreckt.

6. Verteiler nach Anspruch 1, bei dem jeder der zweiten Träger (7) für Anschlussmodule auf einer Seite des Einschubelements angeordnet ist, die ihm zugeordnet ist.

7. Verteiler nach Anspruch 1, bei dem die jeweiligen beiden Enden (e1. 20; e2, 20) jeder Verbindungsfaser (FL) sich längs einer dritten Richtung (Z) erstrecken.

8. Verteiler nach Anspruch 1, bei dem mindestens ein Steuermittel (31) dazu geeignet ist, kontinuierlich oder auf einen mitgeteilten Fehler aus der Entfernung jede optische Faser (R) der ersten Gruppe und/oder jede optische Faser (E) der zweiten Gruppe zu testen.

9. Verfahren zum Anschließen einer Verbindungsfaser (FL) in dem Verteiler gemäß einem der Ansprüche 1 bis 8 mit den folgenden Schritten:
- a) man ändert die Position der Vorrichtung in dem Aufbewahrungsbereich.
- b) man löst die Verbindung eines ersten Endes (e1, 20) einer Verbindungsfaser (FL), die an dem zweiten Träger (7) des ersten Einschubelements (B1) in dem Aufbewahrungsbereich angeschlossen ist,
- c) man transferiert das erste Faserende (e1, 20) in Richtung des ersten Trägers (7) des ersten Einschubelements (B1),
- d) man schließt das erste Faserende (e1, 20) in einer Öffnung eines Moduls (12) des ersten Trägers an,
- e) man ändert die Position der Vorrichtung in dem Aufbewahrungsbereich,
- f) man löst die Verbindung eines zweiten Faserendes (e2, 20), das an dem zweiten Träger (7) des zweiten Einschubelements (B2) in dem Aufbewahrungsbereich angeschlossen ist,
- g) man transferiert das zweite Faserende (e2, 20) in Richtung des ersten Trägers (7) des zweiten Einschubelements (B2),
- h) man schließt das zweite Faserende (e2, 20) in einer Öffnung eines Moduls (12) des ersten Trägers (7) des zweiten Einschubelements (B2) an.

10. Verfahren nach Anspruch 9, bei dem die Verbindungsfaser (FL), deren Verbindung in dem Aufbewahrungsbereich zu lösen ist, sich in diesem Bereich auf der höchsten Ebene befindet

11. Verfahren nach Anspruch 9, bei dem das Anschließen der Verbindungsfaser (FL) oberbalb der Masse an Verbindungsfasern, die in Betrieb sind, durchgeführt wird.

12. Verfahren zum Lösen einer Verbindung einer Verbindungsfaser (FL) in dem Verteiler gemäß einem der Ansprache 1 bis 8, das die folgenden Schritte aufweist:
- a) man ändert die Position der Vorrichtung in dem Bereich zwischen dem ersten Träger (7) des ersten Einschubelements (B1) und dem ersten Träger (7) des zweiten Einschubelements(B2),
- b) man löst die Verbindung eines zweiten Endes (e2, 20) der Faser, die an dem ersten Träger (7) des zweiten Einschubelements (B2) angeschlossen ist,
- c) man befreit das zweite Faserende (e2, 20) aus der Masse der sich im Betrieb befindlichen Verbindungsfasem (FL),
- d) man löst die Verbindung eines ersten Endes (e1, 20) der Faser, die an dem ersten Träger (7) des ersten Einschubelements (B1) angeschlossen ist,
- e) man zieht die Verbindungsfaser (FL) aus dem Verteiler mit Hilfe einer Extraktionsvorrichtung heraus,
- f) man schließt die Verbindungsfaser (FL) in dem Aufbewahrungsbereich an.

13. Verfahren nach Anspruch 12, bei dem Schritt e) darin besteht, die Verbindungsfaser an dem ersten Ende (e1, 20) zu ziehen.

14. Verfahren nach Anspruch 13, bei dem das Ziehen der Verbindungsfaser (FL) oberhalb des ersten Einschubelements (B1) durchgeführt wird.

15. Verfahren nach Anspruch 12, bei dem die Extraktionsvorrichtung für Verbindungsfasern ein Rollenpaar (29) aufweist, zwischen dem die Verbindungsfaser (FL) hindurchgeführt wird, wobei die Rollen dafür ausgerichtet sind, in Rotationsbewegung angetrieben zu werden, um so die Verbindungsfaser voranzubewegen.

16. Verfahren nach Anspruch 15, bei dem die Rollen (29) mit einem elastisch verformbaren Werkstoff überzogen sind, um sich an die Form der Verbindungsfaser bei ihrem Durchtritt durch die Rollen anzupassen.

17. Verfahren, bei dem bei den Schritten b) und f) des Verfahrens gemäß Anspruch 9 und bei den Schritten b) und d) des Verfahrens gemäß Anspruch 12:
- 1) man die Position der Vorrichtung längs der ersten (X), zweiten (Y) und dritten (Z) Richtung in der Nähe einer Öffnung eines Anschlussmoduls eines Trägers (7) in Arbeitsstellung verändert, wobei an der Öffnung das Faserende angeschlossen ist, um das Greifelement (16) im wesentlichen mit der Achse der Öffnung auszurichten,
- 2) man die Position der Vorrichtung längs der dritten Richtung (Z) in Richtung auf das Anschlussmodul (12) verändert, bis das Faserende in den Schlitz (19) des Greifelements (16) eintritt,
- 3) man längs der ersten Richtung (X) das Halteelement (22) in seine Arbeitsstellung bringt, um das Faserende mit letzterem in Verbindung zu bringen,
- 4) man längs der dritten Richtung (Z) die Position der Vorrichtung in entgegengesetzter Richtung zu der des Anschlussmoduls (12) in einem Abstand nahe letzterem verändert,
- 5) man den Träger (7) in Ruhestellung kippt.

18. Verfahren, bei dem bei den Schritten d) und h) des Verfahrens gemäß Anspruch 9 und bei dem Schritt f) des Verfahrens gemäß Anspruch 12,
- 1) man die Position der Vorrichtung längs der ersten (X), der zweiten (Y) und der dritten (Z) Richtung in der Nähe einer Öffnung eines Anschlussmoduls (12) des Trägers (7) in Arbeitsstellung ändert, wobei die Öffnung dazu bestimmt ist, mit dem Faserende verbunden zu werden, um das Greifelement (16) im wesentlichen mit der Achse der Öffnung auszurichten,
- 2) man längs der ersten Richtung (X) das Halteelement (22) in seine Ruhestellung bringt, um das anzuschließende Faserende mit dem Halteelement (22) außer Verbindung zu bringen,
- 3) man längs der dritten Richtung (Z) die Position des Schubelements (24) in Richtung des Anschlussmoduls (12) verändert, um das Faserende aus dem Greifelement (16) austreten zu lassen,
- 4) man längs der dritten Richtung (Z) die Position der Vorrichtung in Richtung des Anschlussmoduls (12) verändert, bis das Faserende an letzterem angeschlossen ist,
- 5) man längs der dritten Richtung (Z) die Position der Vorrichtung in der dem Anschlussmodul (12) entgegengesetzten Richtung verändert.

## Claims

1. An optical fibre distributor comprising:
- first (B1) and second (B2) patch panels disposed in mutually facing relationship,
- at least one first support (7) for connecting modules (12) belonging to each panel, each module of the first panel being adapted to be connected to an end of an optical fibre (R) of a first group and each module of the second panel being adapted to be connected to an end of an optical fibre (E) of a second group, an optical fibre of the first being intended to be connected to an optical fibre of the second group by way of a jumper fibre (FL) which comprises two ends (e1, e2) respectively received in a port of one of the modules of the first panel and in a port of one of the modules of the second panel,
**characterised in that**:
said first and second panels each comprise at least one second support (7) for connecting modules, said second supports co-operating with each other to form a stowage zone for jumper fibres (FL) which are not being used.

2. A distributor according to claim 1 wherein said second supports are arranged in mutually facing relationship.

3. A distributor according to claim 1 or claim 2 wherein the jumper fibres (FL) which are not in use are connected in mutually parallel relationship between the second support (7) of the first panel (B1) and the second support (7) of the second panel (B2), each jumper fibre being arranged directly above the preceding one as stowage takes place.

4. A distributor according to any one of claims 1 to 3 wherein the jumper fibres (FL) are all of the same length.

5. A distributor according to claim 1 wherein the first and second patch panels each have first and second opposite sides which respectively extend in first (X) and second (Y) directions, the first and second supports (7) for connecting modules of the first patch panel and the first and second supports (7) for connecting modules of the second patch panel being mounted rotatably about a respective shaft (8) extending in the first direction (X) in such a way that each support (7) is adapted to swing between a rest position (PR) in which the support (7) extends inwardly of the distributor forming an angle (α) with the second direction (Y) and a working position (PT) in which the support extends in the second direction (Y).

6. A distributor according to claim 1 wherein each of the second supports (7) for connecting modules is arranged on one side of the patch panel which is associated therewith.

7. A distributor according to claim 1 wherein the two respective ends (e1, 20; e2, 20) of each jumper fibre (FL) extend in a third direction (Z).

8. A distributor according to claim 1 wherein at least one checking means (31) is capable of remotely testing any optical fibre (R) of the first group or any optical fibre (E) of the second group or both continuously or in response to a signalled fault.

9. A process for connecting a jumper fibre (FL) in the distributor according to any one of claims 1 to 8 comprising the following steps:
- a) displacing the device into the stowage zone,
- b) disconnecting a first end (e1, 20) of a jumper fibre (FL) which is connected on the second support (7) of the first patch panel (B1) in said stowage zone,
- c) transferring said first fibre end (e1, 20) in the direction of the first support (7) of the first patch panel (B 1),
- d) connecting said first fibre end (e1, 20) in a port of a module (12) of said first support,
- e) displacing the device into the stowage zone,
- f) disconnecting a second fibre end (e2, 20) which is connected on the second support (7) of the second patch panel (B2) in said stowage zone,
- g) transferring said second fibre end (e2, 20) in the direction of the first support (7) of the second patch panel (B2), and
- h) connecting said second fibre end (e2, 20) in a port of a module (12) of said first support (7) of the second patch panel (B2).

10. A process according to claim 9 wherein the jumper fibre (FL) to be disconnected in the stowage zone is at the highest level in said zone.

11. A process according to claim 9 wherein the connection of said jumper fibre (FL) is made above the array of jumper fibres in operation.

12. A process for disconnecting a jumper fibre (FL) in the distributor according to any one of claims 1 to 8 comprising the following steps:
- a) displacing the device into the zone between the first support (7) of the first patch panel (B 1) and the first support (7) of the second patch panel (B2),
- b) disconnecting a second end (e2, 20) of said fibre which is connected on the first support (7) of the second patch panel (B2),
- c) freeing said second fibre end (e2, 20) in the array of jumper fibres (FL) in operation,
- d) disconnecting a first end (e1, 20) of the fibre which is connected on the first support (7) of the first patch panel (B1),
- e) extracting said jumper fibre (FL) from the distributor by means of an extraction device, and
- f) connecting said jumper fibre (FL) in the stowage zone.

13. A process according to claim 12 wherein step e) comprises applying traction to said jumper fibre (FL) by said first end (e1, 20).

14. A process according to claim 13 wherein the traction is applied to the jumper fibre (FL) above the first patch panel (B 1).

15. A process according to claim 12 wherein the jumper fibre extraction device comprises a pair of rollers (29) between which said jumper fibre (FL) passes, said rollers being capable of being driven in rotation to cause movement of said jumper fibre.

16. A process according to claim 15 wherein the rollers (29) are covered by an elastically deformable material so as to match the shape of said jumper fibre when it passes between the rollers.

17. A process wherein in steps b) and f) of the process according to claim 9 and in steps b) and d) of the process according to claim 12:
- 1) the device is displaced in the first (X), second (Y) and third (Z) directions in the proximity of a port of a connecting module of a support (7) in the working position, to which port said fibre end is connected, in order to position the gripping element (16) substantially on the axis of said port,
- 2) the device is displaced in the third direction (Z) in the direction of the connecting module (12) until said fibre end passes into the slot (19) of the gripping element (16),
- 3) the holding element (22) is displaced in the first direction (X) into its working position so as to secure said fibre end with respect thereto,
- 4) the device is displaced in the third direction (Z) in the opposite direction to that of the connecting module (12) to a distance close to the latter, and
- 5) said support (7) is swung into the rest position.

18. A process wherein in steps d) and h) of the process according to claim 9 and in step f) of the process according to claim 12;
- 1) the device is displaced in the first (X), second (Y) and third (Z) directions in the proximity of a port of a connecting module (12) of the support (7) in the working position, to which port said fibre end is intended to be connected, in order to position the gripping element (16) substantially on the axis of said port,
- 2) said holding element (22) is displaced in the first direction (X) into its rest position so as to release said fibre end to be connected from the holding element (22),
- 3) the thrust element (24) is displaced in the third direction (Z) in the direction of the connecting module (12) so as to cause said fibre end to come out of the gripping element (16),
- 4) the device is displaced in the third direction (Z) in the direction of the connecting module (12) until said fibre end is connected to the latter, and
- 5) the device is displaced in the third direction (Z) in the opposite direction to that of the connecting module (12).
